# EUROPÄISCHE PATENTSCHRIFT

(11) **EP 0 891 526 B1**
(45) Veröffentlichungstag und Bekanntmachung des Hinweises auf die Patenterteilung: **06.10.1999**
(21) Anmeldenummer: 97919310.9
(22) Anmeldetag: 28.03.1997
(51) Int. Cl.: F26B 17/20, F26B 3/30

(54) **VORRICHTUNGEN ZUR WÄRMEBEHANDLUNG VON SCHÜTTGÜTERN IN SCHNECKEN-FÖRDERERN UND VERFAHREN ZUM TROCKNEN VON SCHÜTTGUT**
DEVICE FOR HEAT-TREATING BULK MATERIALS IN FEED SCREWS AND BULK MATERIAL DRYING METHOD
DISPOSITIF POUR LE TRAITEMENT THERMIQUE DE MATIERES EN VRAC DANS DES CONVOYEURS A VIS, ET PROCEDE DE SECHAGE DE MATIERES EN VRAC

(30) Priorität: 02.04.1996 DE 19613125
(43) Veröffentlichungstag der Anmeldung: 20.01.1999
(73) Patentinhaber: STRICKER, Urban, D-57271 Hilchenbach (DE)
(72) Erfinder: STRICKER, Urban, D-57271 Hilchenbach (DE); SIEBERT, Martin, D-1204 Berlin (DE); STRICKER, Klaus, D-57076 Siegen (DE)
(74) Vertreter: Valentin, Ekkehard, Dipl.-Ing.
(86) Internationale Anmeldenummer: EP9701598
(87) Internationale Veröffentlichungsnummer: WO9737184

(56) Entgegenhaltungen:
- EP-A- 0 005 552
- EP-A- 0 559 012
- DE-A- 1 906 278
- DE-A- 1 922 230
- DE-A- 2 341 331
- DE-A- 2 932 446
- DE-A- 4 024 070
- GB-A- 2 110 803
- US-A- 4 430 057
- US-A- 5 143 626
- US-A- 5 497 562
- US-E- R E33 580

## Beschreibung

Die Erfindung betrifft Vorrichtungen mit denen Schüttgüter wärmebehandelt werden können.

Es sind vielfältige technische Variationen zu Förderern mit Schnecken bekannt, die Aufgaben zur Wärmebehandlung lösen. Ebenso sind zahlreiche Vorrichtungen bekannt, mit denen eine Wärmebehandlung unter Eintrag von Wärmestrahlung unter kontinuierlichem Transport auch von Schüttgütern erfolgt. Die hierbei zur Anwendung gelangenden Transportvorrichtungen arbeiten nach den Prinzipien der Band-, Ketten- oder Schwingförderung (nach DIN 15 201).

Die Kombination von Schneckenförderung mit dem Eintrag von Strahlungswärme ist bekannt aus der DE-OS 19 06 278, der DE-OS 19 22 230, der US 5,143,626 A und der US 5,497,562 A. Alle genannten Beschreibungen zeigen die Anbringung von Infrarot-Wärmestrahlern außerhalb des Umfanges der förderwirksamen Schnecke. Dies führt einerseits zu einer nachteiligen Bestrahlung von Schneckenteilen, andererseits entspricht der Abstand zum Bestrahlungsgut mindestens dem Schneckenradius, wodurch die Effizienz der Wärmeübertragung äußerst begrenzt bleibt.

Mit der US 4,430,057 A wird vorgeschlagen, einen Teil des Bestrahlungsgutes mittels schneckenförmig angeordneter Paddel in die Nähe der Infrarot-Stahlungsquellen zu fördern.

Die DE 23 41 331 A beschreibt einen Trommeltrockner, bei dem die Schneckenwelle durch heiße Brenngase aufgeheizt wird, wobei diese als Wärmestrahlungsquelle wirkt. Die gesamte Strahlungsleistung wird radial über den gesamten Umfang der Schneckenwelle abgestrahlt. Die Wirksamkeit dieser Strahlungsquelle bleibt immer begrenzt durch ihre im Vergleich zur elektrisch betriebenen Infrarotstrahlern geringe Leistungsdichte sowie durch ihre charakteristische Scheitelwellenlänge im langwelligen Infrarotbereich (nach IEC-Klassierung).

Der vorliegenden Erfindung liegt die Aufgabe zugrunde, eine Wärmebehandlung mit Tiefenwirkung von Schüttgütern maschinentechnisch im kontinuierlichen Betrieb so zu ermöglichen, daß eine gezielte und schnelle Temperierung der Schüttgüter in möglichst exakt einzuhaltenden Temperaturbereichen zu möglichst kurzen Prozeßzeiten erfolgen kann. Die Wärmebehandlung kann dabei zum Trocknen und/oder zur gezielten Änderung weiterer physikalischer oder chemischer Stoffeigenschaften dienen.

Die gestellte Aufgabe wird erfindungsgemäß durch die Merkmale der Patentansprüche 1 oder 2 gelöst, wobei zum Transport des Schüttgutes das Prinzip der Förderung mit Schnecken genutzt wird und der Wärmeeintrag zur Temperierung des Fördergutes durch Wärmestrahlung während des Transportes im Schnecken- oder Schneckenrohrförderer erfolgt.

Weitere Ausgestaltungen und Vorteile der Erfindung sind Gegenstand von Unteransprüchen.

Durch die Erfindung können insbesondere folgende anwendungsspezifische Vorteile der Schneckenförderung erschlossen werden:
- Durch die auf Schub beruhende Förderung erfolgt im allgemeinen Fall im Bereich des Kontaktes des Fördergutes mit der schubwirksamen Schneckenflanke eine Umwälzung des Materiales. Dieser Umwälzungseffekt ist bei Schneckenrohrförderern besonders ausgeprägt, da hier zusätzlich die Trogwand bewegt ist. Durch diese Umwälzung wird eine gleichmäßige Bestrahlbarkeit des Fördergutes mit Wärmestrahlung und somit eine gleichmäßige Temperierung unterstützt.
- Durch eine zonenartige konstruktive Auslegung entsprechender Schneckenförderer können auch dem eigentlichen Temperierprozeß vor- oder nachgeschaltete Prozeßschritte maschinentechnisch in einer Einheit verbunden werden. So ist z.B. eine möglichst exakte gleichmäßige Beschickung der Temperierstrecke bei allen Temperierverfahren anzustreben. Beim Konzept der Vibrationsförderung wird dies beispielsweise durch die Vorschaltung einer Zellradschleuse (vgl. GB-A-1 313 203) ermöglicht. Neben einer fachmännisch zu realisierenden Dosierzone werden im weiteren Verlauf der Beschreibung noch andere für die Aufgabe vorteilhafte Schneckenzonen beschrieben.

Zu den anwendungsspezifischen Vorteilen einer Temperierung durch Wärmestrahlung zählen insbesondere:
- Schneller Wärmeübertrag in das Schüttgut
- Tiefenwirksamkeit der Wärmestrahlung, d.h. daß das Schüttgut zumindest anteilig in seinem Inneren erwärmt wird.

Dieser Vorteil der Wärmestrahlung wird beispielsweise in der Kunststofftechnik vielfältig genutzt, da die prinzipiell schlecht wärmeleitenden Kunststoffe so durch Überwindung der Hemmnisse zur Wärmekonvektion schnell temperiert werden können.

Durch die erfindungsgemäße Kombination der Prinzipien der Schneckenförderung mit dem Wärmeübertrag durch Wärmestrahlung werden zahlreiche Aufgabenstellungen in der Temperiertechnik vorteilhaft lösbar.

Die Erfindung wird in schematischen Zeichnungen durch Ausführungsbeispiele erläutert.

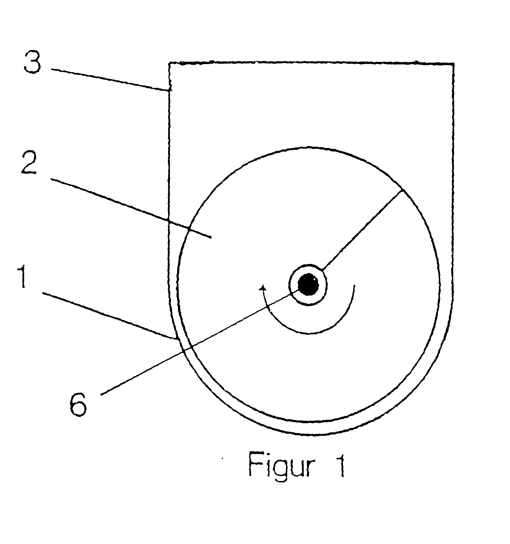

Die Fig. 1 zeigt schematisch im Querschnitt die Anordnung stabförmiger IR-Strahler 6 im Inneren der Schneckenwelle der Schnecke 2. Dazu ist die Welle hohl und verfügt über entsprechende Öffnungen zum Auslaß der IR-Strahlung, damit das Fördergut durch die IR-Strahlung beaufschlagt wird. Die Schnecke ist beispielhaft als Vollschnecke ausgeführt. Andere Schneckenformen wie z.B. Schneckenband, Paddelschnecke o.ä., die teilweise auch noch den Vorteil mit sich bringen, daß die IR-Strahlung zum Fördergut weniger abgedeckt wird, sind auch ausführbar. Die Wände des Schneckentroges und die Schnecke selber werden zweckmäßigerweise IR-reflektierend beschichtet oder aus IR-reflektierendem Material wie z.B. Aluminium hergestellt, um den Anteil an im Material wirksamer IR-Strahlung innerhalb der Materialschüttung zu erhöhen.

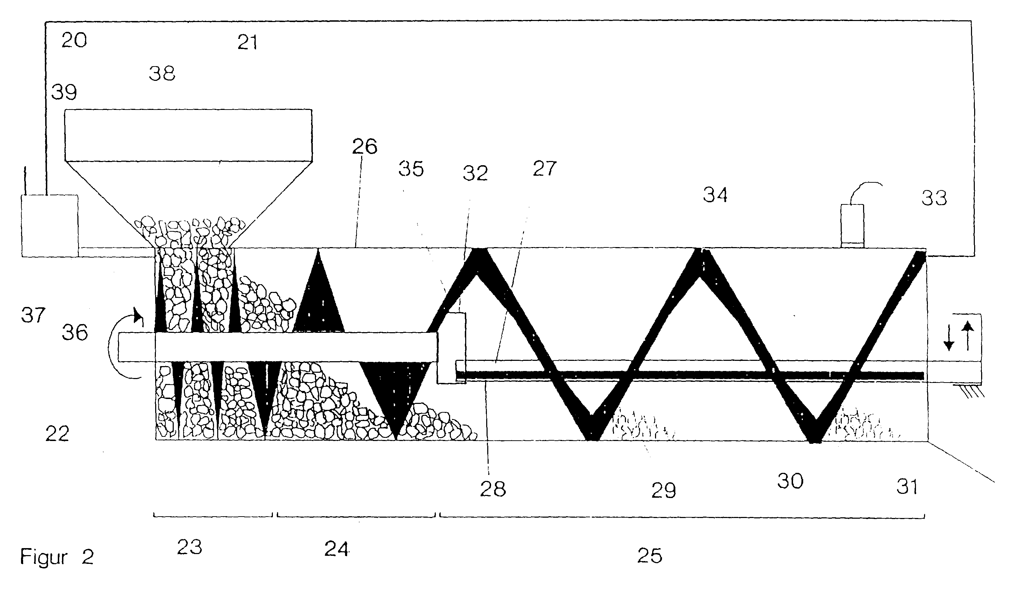

Nach der in Fig. 2 gezeigten Ausführungsmöglichkeit ist eine auf Förderern mit Schnecken basierende Temperierstrecke eingangsseitig mit einer sogenannten Einzugs- und Dosierzone der gleichen Schnecke gekoppelt werden. Aus einem einfachen Bevorratungsbehältnis (Silo o.ä.) wird das Material über einen Trichter einer zunächst als Vollschnecke ausgeführten Schnecke zugeführt. Die Einzugszone wird hinsichtlich des Gangvolumens so ausgeführt, daß exakt die Materialmenge aufgenommen wird, die im weiteren Verlauf der Schnecke, in der sogenannten Temperierzone als Füllgrad erwünscht ist. In der sich der Einzugszone anschließenden Dosierzone wird das Gangvolumen so erweitert, daß sich zu Beginn der Temperierzone der gewünschte Füllgrad ergibt. Diese in Figur 2 gezeigte Ausführungsmöglichkeit der Erfindung wird beispielhaft an einem Schneckenförderer dargestellt. Ein Schneckenrohrförderer ist ebenso einsetzbar, wobei die Materialaufgabe dabei axial erfolgt. Das zu behandelnde bereits zerkleinerte Material wird in die Materialaufgabe 20 eingefüllt. Eine optionale Zerkleinerung kann unmittelbar nach der Materialaufgabe 20 und vor der Einzugszone in einem Zerkleinerer mit einem nachgeschalteten Pufferraum stattfinden. Von dort gelangt es in die Einzugszone der auf der Antriebswelle 22 angebrachten Schnecke. Die Antriebswelle 22 treibt im vorliegenden Beispiel die Schnecke mit drei unterschiedlichen Funktionszonen mit derselben Drehzahl an. Durch die verschiedenen Schneckenausführungen und Steigungen 23, 24, 25 in den einzelnen Zonen werden je nach Bereich, in dem sich das Material befindet, verschiedene Fördergeschwindigkeiten erreicht und damit verschiedene Aufgaben erfüllt. Aus der Einzugszone 23 gelangt das Material in die Dosierzone 24, in der durch entsprechende Ausführung der Schnecke bezüglich Steigung und Geometrie und Drehzahl der Antriebswelle 22 sichergestellt wird, daß nur nach oben streng begrenzte Mengen Material in die Temperierzone 25 gelangen und der Füllungsgrad Φ so eingestellt wird, daß der unten beschriebene Träger für Installation 27 in jedem Fall frei von Material gehalten wird. Dies wird bei Φ≈0,02-0,15 mit hoher Sicherheit erreicht. In der Temperierzone 25, die hier mit einem Schneckenband als Ausführung der Schnecke gewählt wurde, um das Material weitgehend ohne Abschirmung durch Schneckenteile der IR-Strahlung aussetzen zu können und um die Beaufschlagung der Förderelemente durch Strahlungswärme aufgrund der kleineren Fläche der Förderelemente möglichst gering zu halten, ist ein Träger für die Installation 27 der Infrarotstrahler 28 angebracht. Der Träger 27 kann, wie hier angedeutet, nur einseitig im Festlager 33 gelagert werden, aber auch, je nach Länge und Ausführung beidseitig wie hier auch beispielhaft mit einem auf der Welle 22 mitlaufenden Lager 32 gezeigt oder auch mehrfach gelagert werden. Die Höhe des Trägers 27 über dem Material bzw. dem jeweiligen tiefsten Punkt des Schneckenmantelrohres 26 wird verstellbar vorgesehen, um die Intensitätsabstimmung der IR-Strahlung der aus den IR-Strahlern 28 emittierten Strahlung auf das jeweilige Material zu ermöglichen. Diese Einstellung auf das zu behandelnde Material kann einmalig bei der Inbetriebnahme der Vorrichtung erfolgen oder alternativ kontinuierlich über einen berührungslos messenden Temperatursensor 34 bspw. außerhalb des Schneckenmantelrohrs 26 angebracht und über ein Fenster messend oder auch bspw. am Träger 27 angebracht, der die Temperatur des Materials mißt. Mit dem Meßsignal kann bspw. die Höhe des Trägers oder eine andere, zur Regelung der im Material wirksamen IR-Strahlungsintensität nutzbare Stellgröße (wie Strahlertemperatur, Anzahl der eingeschalteten Strahler usw.) so beeinflußt werden, daß die Temperierung den Sollvorgaben entspricht. Die Versorgungsleitungen für die Installationen auf dem Träger werden z.B. durch eine feste oder flexible Führung vom Träger zum Maschinengestell geführt.

Das zu behandelnde Material wird durch die Temperierzone 25 transportiert und durchläuft dabei die Behandlung, schematisch als teilweise behandeltes Material 29 und weitgehend behandeltes Material 30 dargestellt. Über eine Auslaßrutsche 31 kann z.B. das Material in einen nächsten Verfahrensschritt übergeben werden. Eine Variation des Schneckenbandes 35 kann darin bestehen, daß das Band aus Hohlmaterial besteht, durch das ein wärmetragendes Medium z.B. im Kreislauf geführt wird, um die Schnecke selber stabil zu temperieren und um als zusätzlichem Effekt das zu behandelnde Material mit zu erwärmen oder auch gegebenenfalls zu kühlen. Für die Schneckenteile im Dosierbereich 24 und im Einzugsbereich 23 gilt die gleiche Möglichkeit.

Die Darstellung der Figur 2 mit einem geschlossenen Schneckenmantelrohr 26 ermöglicht auch vorteilhaft eventuell entstehende Emissionen (z.B. Stäube, Gerüche, etc.) mit der erwärmten Luft bei der Behandlung über z.B. die Materialaufgabe 20 abzusaugen und in nachgeschalteten Filtern zurückzuhalten oder aber wie bspw. gezeigt im Schneckeneingangsbereich abgesaugt 36 und einer Förder- und Filtereinheit 37 zugeführt werden. die Luft kann dabei optional gefiltert ins Freie 39 abgegeben oder über eine Luftkreislaufführung weitgehend wieder zur Temperierung des Materials in der Temperierzone 25 genutzt werden und somit zu einem sparsamen Energieeinsatz beitragen. Dabei kann vorteilhaft die bei der Absaugung mittransportierte Wärme im Aufgabebereich 20 sowie in der Einzugs- 23 und Dosierzone 24 zur Vorwärmung des Materials genutzt werden. Ebenso wie die Emissionsabsaugung 36, 37 kann fachmännisch einfach Unter- oder Überdruck am Prozeßraum angelegt werden.

Für bestimmte Anwendungsfälle können entsprechende Vorrichtungen erfindungsgemäß ausgangsseitig mit einer zusätzlichen Abkühlzone, optional auf gleicher Ebene im gleichen Förderelement, gekoppelt werden.

Die erfindungsgemäß erschlossenen Vorteile werden bspw. bei der Trocknung von Kunststoffgranulaten verdeutlicht. Vorteile ergeben sich auch bei der Behandlung anderer Schüttgüter, wie Futtermitteln und vielen mehr. Als Nebeneffekte der Schneckenförderung ergeben sich neben der kontinuierlichen Prozeßführung die Kopplungsmöglichkeiten mit weiteren Prozeßschritten der ein- und ausgangsseitigen Dosierung sowie die einfache Ausführbarkeit der Kapselung des Prozeßraumes zur Erfassung von Emissionen und zum Anlegen eines gegebenenfalls vorteilhaften Unterdruckes.

### Bezugszeichenliste

- 1: Schneckenqehäuse, unterer Teil
- 2: Schnecke
- 3: Schneckengehäuse

- 20: Materialaufgabe
- 21: aufgegebenes Material
- 22: Antriebswelle der Schnecke
- 23: Einzugszone
- 24: Dosierzone
- 25: Temperierzone
- 26: Schneckenmantelrohr
- 27: Träger für Installation
- 28: Infrarotstrahler
- 29: teilweise behandeltes Material
- 30: weitgehend behandeltes Material
- 31: Auslaßrutsche
- 32: auf Welle (22) mitlaufendes Lager, Lagerhöhe einstellbar
- 33: Festlager, Lagerhöhe einstellbar
- 34: berührungslos messender Temperatursensor
- 35: Schneckenband
- 36: Abluftabsaugung oder auch Druckbeaufschlagung
- 37: Förder- und Filtereinheit oder auch Vakuumpumpe bzw. Kompressor
- 38: Luftkreislaufführung
- 39: Abluft ins Freie

## Patentansprüche

1. Vorrichtung zur Wärmebehandlung von Schüttgütern mit einem das Schüttgut fördernden Schneckenförderer, dem in einer Temperierzone (25) Infrarot-Wärmestrahler zugeordnet sind,
**dadurch gekennzeichnet,**
daß die Infrarot-Wärmestrahler in einer strahlungsdurchlässig ausgeführten Schneckenwelle angebracht sind.

2. Vorrichtung zur Wärmebehandlung von Schüttgütern mit einem das Schüttgut fördernden Schneckenförderer, dem in einer Temperierzone (25) Infrarot-Wärmestrahler zugeordnet sind,
**dadurch gekennzeichnet,**
daß die Infrarot-Wärmestrahler bei Schneckenförderern nach dem Prinzip von Bandschnecken oder bei Schneckenrohrförderern im zentralen Bereich des Umlaufdurchmessers angebracht sind.

3. Vorrichtung nach Anspruch 2,
**dadurch gekennzeichnet,**
daß die Infrarot-Wärmestrahler an einem Träger für Installationen (27) angebracht sind und daß dieser Träger in seiner Höhe einstellbar ist.

4. Vorrichtung nach einem der Ansprüche 1 bis 3,
**dadurch gekennzeichnet,**
daß die Schnecke eine der Temperierzone (25) vorgeordnete Einzugzone (23) und/oder eine Dosierzone (24) aufweist.

5. Vorrichtung nach einem der Ansprüche 1 bis 4,
unter Verwendung eines geschlossenen Schneckenmantelrohres,
**dadurch gekennzeichnet,**
daß die Absaugung von Emissionen aus dem Prozeßraum und/oder das Anlegen eines von der Umgebung abweichenden atmosphärischen Druckes an den Prozeßraum erfolgt.

6. Vorrichtung nach mindestens einem der vorhergehenden Ansprüche 1 bis 5,
**dadurch gekennzeichnet,**
daß die Infrarot-Wärmestrahler als stabförmige Elemente ausgebildet und angebracht sind.

7. Vorrichtung nach mindestens einem der vorhergehenden Ansprüche 1 bis 6,
**dadurch gekennzeichnet,**
daß mehrere Infrarot-Wärmestrahler angebracht sind, die gesondert einschaltbar sind.

8. Vorrichtung nach mindestens einem der vorhergehenden Ansprüche 1 bis 7,
**dadurch gekennzeichnet,**
daß die Füllgrad (Φ) der der Temperierzone (25) zugeordneten Förderschnecke (2) einstellbar ist.

9. Vorrichtung nach mindestens einem der vorhergehenden Ansprüche 1 bis 8,
**dadurch gekennzeichnet,**
daß die Förderschnecke (2) und die Wände des Schneckentroges (9) Infrarot-reflektierend beschichtet sind oder aus Infrarot-reflektierendem Material hergestellt sind.

10. Vorrichtung nach mindestens einem der vorhergehenden Ansprüche 1 bis 9,
**dadurch gekennzeichnet,**
daß die Einzugszone (23) und/oder die Dosierzone (24) der Förderschnecke (2) hinsichtlich des Gangvolumens so ausgelegt ist, daß diejenige Schüttgutmenge förderbar ist, die dem einzustellenden Füllgrad (Φ) der Förderschnecke (2) in der Temperierzone (25) entspricht.

11. vorrichtung nach mindestens einem der vorhergehenden Ansprüche 1 bis 10,
**dadurch gekennzeichnet,**
daß die Förderschnecke (2) in der Temperierzone (25) bspw. bezüglich ihrer Steigung und Geometrie so ausgelegt ist, daß ein Füllgrad (Φ) zwischen 0,02 bis 0,15 einstellbar ist.

## Claims

1. Device for thermal treatment of bulk materials with a worm conveyor which conveys the bulk material and with which infrared heat radiators are associated in a cooling zone (25), characterised in that the infrared radiators are mounted in a worm shaft constructed to be permeable by radiation.

2. Device for thermal treatment of bulk materials with a worm conveyor which conveys the bulk material and with which infrared heat radiators are associated in a cooling zone (25), characterised in that in the case of worm conveyors according to the principle of strip worms or in the case of worm tube conveyors the infrared radiators are mounted in the central region of the encircling diameter.

3. Device according to claim 2, characterised in that the infrared radiators are mounted at a support for installations (27) and that this support is adjustable in its height.

4. Device according to one of claims 1 to 3, characterised in that the worm has an intake zone (23) and/or a metering zone (24) arranged upstream of the cooling zone (25).

5. Device according to one of claims 1 to 4, with use of a closed worm casing tube, characterised in that the suction of emissions from the process space and/or the application to the process space of an atmospheric pressure deviating from the environment is or are carried out.

6. Device according to at least one of the preceding claims 1 to 5, characterised in that the infrared heat radiators are constructed and mounted as rodlike elements.

7. Device according to at least one of the preceding claims 1 to 6, characterised in that several infrared heat radiators are mounted, which can be separately switched on.

8. Device according to at least one of the preceding claims 1 to 7, characterised in that the degree (Φ) of fitting of the conveyor worm (2) associated with the cooling zone (25) is settable.

9. Device according to at least one of the preceding claims 1 to 8, characterised in that the conveyor worm (2) and the walls of the worm trough (9) are coated to be infrared reflective or are made of infrared reflective material.

10. Device according to at least one of the preceding claims 1 to 9, characterised in that the intake zone (23) and/or the metering zone (24) of the conveyor worm (2) is or are so designed with respect to the thread volume that the bulk material quantity conveyable corresponds with the degree (Φ) of filling, which is to be set, of the conveyor worm (2) in the cooling zone (25).

11. Device according to at least one of the preceding claims 1 to 10, characterised in that the conveyor worm (2) is so designed in the cooling zone (25) or with respect to its inclination and geometry that a degree (Φ) of filling between 0.02 and 0.15 is settable.

## Revendications

1. Dispositif pour le traitement thermique de matières en vrac avec un convoyeur à vis transportant les matières en vrac, auquel sont associés, dans une zone de régulation thermique (25), des émetteurs de rayonnement thermique infrarouge, caractérisé en ce que les émetteurs de rayonnement thermique infrarouge sont disposés dans un arbre de vis exécuté de manière perméable aux rayonnements.

2. Dispositif pour le traitement thermique de matières en vrac avec un convoyeur à vis transportant les matières en vrac, auquel sont associés, dans une zone de régulation thermique (25), des émetteurs de rayonnement thermique infrarouge, caractérisé en ce que les émetteurs de rayonnement thermique infrarouge, sur des convoyeurs à vis selon le principe des vis à bande ou dans le cas de convoyeurs tubulaires à vis, sont disposés dans la zone centrale du diamètre périphérique.

3. Dispositif selon la revendication 2, caractérisé en ce que les émetteurs de rayonnement thermique infrarouge sont disposés sur un support pour installations (27) et en ce que ce support est réglable en hauteur.

4. Dispositif selon une quelconque des revendications 1 à 3, caractérisé en ce que la vis présente une zone d'introduction (23) et/ou une zone de dosage (24) avant la zone de régulation thermique.

5. Dispositif selon une quelconque des revendications 1 à 4, en utilisant un tube enveloppé fermé à vis, caractérisé en ce que l'aspiration des émissions de la chambre de procédé et/ou la mise sous une pression différente de la pression atmosphérique ambiante est réalisée dans la chambre de procédé.

6. Dispositif selon au moins une quelconque des revendications précédentes 1 à 5, caractérisé en ce que les émetteurs de rayonnement thermique infrarouge sont exécutés et disposés sous forme d'éléments en forme de barre.

7. Dispositif selon au moins une quelconque des revendications précédentes 1 à 6, caractérisé en ce qu'on a disposé plusieurs émetteurs de rayonnement thermique infrarouge qui peuvent être commandés séparément.

8. Dispositif selon au moins une quelconque des revendications précédentes 1 à 7, caractérisé en ce que le degré de remplissage (φ) de la vis de transport (2) associée à la zone de régulation thermique (25) est réglable.

9. Dispositif selon au moins une quelconque des revendications précédentes 1 à 8, caractérisé en ce que la vis de transport (2) et les parois de l'auge à vis (9) sont revêtues de manière à réfléchir les infrarouges ou sont exécutées en matériau réfléchissent les infrarouges.

10. Dispositif selon au moins une quelconque des revendications précédentes 1 à 9, caractérisé en ce que le volume des pas de la zone d'introduction (23) et/ou de la zone de dosage (24) de la vis de transport (2) est tel qu'on peut transporter une quantité de matières en vrac qui correspond au degré de remplissage (φ) de la vis de transport (2) qu'on peut régler dans la zone de régulation thermique (25).

11. Dispositif selon au moins une quelconque des revendications précédentes 1 à 10, caractérisé en ce que la vis de transport (2), dans la zone de régulation thermique (25) resp. eu égard à sa pente et sa géométrie, est exécutée de telle manière qu'on peut régler un degré de remplissage (φ) entre 0,02 et 0,15.
